(19) Europäisches Patentamt
European Patent Office
Office européen des brevets

(11) **EP 3 354 143 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **18152083.4**

(22) Anmeldetag: **17.01.2018**

(51) Internationale Patentklassifikation (IPC):
*A24C 5/34* (2006.01)   *G01B 7/06* (2006.01)
*G01N 27/22* (2006.01)   *A24D 3/02* (2006.01)

(52) Gemeinsame Patentklassifikation (CPC):
**A24C 5/3412; G01B 7/085; A24D 3/025**

(54) **VERFAHREN UND VORRICHTUNG ZUM ÜBERWACHEN UND HERSTELLEN EINES FILTERSTRANGS DER TABAK VERARBEITENDEN INDUSTRIE**

METHOD AND DEVICE FOR THE MONITORING AND PRODUCTION OF A FILTER ROD FOR THE TOBACCO PROCESSING INDUSTRY

PROCÉDÉ ET DISPOSITIF DE SURVEILLANCE ET DE FABRICATION D'UN BOUDIN DE FILTRE DE L'INDUSTRIE DE TRAITEMENT DU TABAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 DE 102017101825**

(43) Veröffentlichungstag der Anmeldung:
**01.08.2018 Patentblatt 2018/31**

(73) Patentinhaber: **Hauni Maschinenbau GmbH 21033 Hamburg (DE)**

(72) Erfinder:
• MÜLLER, Johannes
22767 Hamburg (DE)
• SCHREIBER, Peter
21465 Reinbek (DE)

(74) Vertreter: **Seemann & Partner Patentanwälte mbB Raboisen 6 20095 Hamburg (DE)**

(56) Entgegenhaltungen:
EP-A1- 1 079 203       DE-A1-102011 006 414
DE-A1-102011 006 416

**Beschreibung**

Die Erfindung betrifft ein Verfahren zum Überwachen eines aus einem Filtertowmaterial hergestellten endlosen Filterstrangs der Tabak verarbeitenden Industrie, sowie eine Vorrichtung zum Herstellen eines aus einem Filtertowmaterial hergestellten Filterstrangs der Tabak verarbeitenden Industrie.

Bei der Herstellung von Filterstäben, die aus einem zuvor hergestellten Filterstrang abgelängt werden, ist die Konstanz der Materialeigenschaften und damit die Konstanz der Filtereigenschaften sehr wichtig. Bei der Herstellung des Filterstrangs wird daher auf gleichbleibende Qualität und Zusammensetzung des Strangmaterials Wert gelegt. Diese werden im laufenden Produktionsbetrieb geprüft. Messungen zur Qualitätssicherung werden dabei entweder online am Filterstrang in einer Filterstrangmaschine durchgeführt oder offline am abgelängten Filterstab, beispielsweise in so genannten Filterstabmessstationen.

Für die Messungen werden üblicherweise eine Reihe von zwei oder mehr Messeinrichtungen eingesetzt, die von stichprobenartig oder systematisch aus dem Produktionsprozess ausgeschleusten Filterstäben nacheinander durchlaufen werden. Das Ausschleusen geschieht automatisch oder aufgrund einer manuellen Anforderung mit Luftdruckstößen oder mit anderen geeigneten Hilfsmitteln.

Filter bestehen üblicherweise aus einem Gemisch von Inhaltsstoffen. So wird bei üblichen Filtern, die aus einem Filtertow aus Celluloseacetat (CA, auch Zelluloseazetat) hergestellt werden, ein Weichmacher zugesetzt, üblicherweise Triacetin oder Triethylenglycoldiacetat. Damit werden die Celluloseacetatfasern verklebt und das Filtermaterial verfestigt. Der Weichmacher wird in einer Dosiereinrichtung fein zerstäubt auf das ausgebreitete Filtertow ausgebreitet, bevor dieser zu einem zylindrischen Faserstrang geformt wird. Der Anteil des Weichmachers am Filterstrang beträgt üblicherweise etwa 6 Gew.-%. Des Weiteren nimmt der Filterstrang bei seiner Herstellung Feuchtigkeit aus der Umgebungsluft auf, gegebenenfalls auch bei einer Klimatisierung in einer Klimakammer.

Die Filtereigenschaften der fertigen Filterstäbe hängen empfindlich von den Gewichtsanteilen der verschiedenen Inhaltsstoffe des Filterstabes ab, insbesondere vom Anteil des Weichmachers. Bei der Herstellung des Filterstrangs ist daher ein möglichst gleichmäßiger Auftrag von Weichmacher in Relation zur Trockenmasse des Filtertows sicherzustellen.

Ein Verfahren, diese verschiedenen Anteile mengenmäßig zu bestimmen und zu überwachen ist aus der deutschen Patentanmeldung DE 10 2011 006 414 A1 der Anmelderin bekannt. Darin wird das Filtermaterial durch eine Mikrowellenmesseinrichtung und durch eine HF-Messeinrichtung gefördert, wobei bei wenigstens einer Mikrowellenfrequenz und bei wenigstens einer Hochfrequenz wenigstens drei Messgrößen gemessen werden, die von den Mengen und den Permittivitätszahlen der im Gemisch enthaltenen Inhaltsstoffe des Filtermaterials beeinflusst werden, wobei Gewichtsanteile der Inhaltsstoffe des Filtermaterials aus den Messergebnissen ermittelt werden.

Die Permittivität oder dielektrische Leitfähigkeit ist eine komplexwertige Größe, die materialabhängig, frequenzabhängig und temperaturabhängig ist. Sie beschreibt die Durchlässigkeit eines Materials für elektromagnetische Wechselfelder. Die Permittivitätszahl $\varepsilon$ oder relative Permittivität gibt das Verhältnis der Permittivität eines Mediums zu der Permittivität $\varepsilon_0$ des Vakuums an. Sie bezeichnet die feldschwächenden Effekte der dielektrischen Polarisation des Mediums. Der Realteil wird üblicherweise als $Re(\varepsilon)$ oder auch $\varepsilon'$ bezeichnet, der Imaginärteil, der mit dielektrischen Verlusten im dielektrischen Material zusammenhängt, mit $Im(\varepsilon)$ oder $\varepsilon''$. Gemäß DE 10 2011 006 414 A1 wird der Effekt ausgenutzt, dass der Verlauf der komplexen Komponenten der Permittivitätszahl für verschiedene Substanzen frequenzabhängig unterschiedlich ist.

Ein Stoff, der bei der Filterstrangproduktion eine Rolle spielt, aber bislang noch nicht überwacht worden ist, ist der Leim, der auf eine Innenseite des Umhüllungspapierstreifens aufgebracht wird, bevor der Umhüllungspapierstreifen um das stranggeformte Filtermaterial gewickelt und mit diesem verklebt wird. Hierbei handelt es sich um einen Kaltleim, der häufig auf Kunststoffbasis hergestellt wird, beispielsweise als Copolymer. Der Kaltleim hat die Eigenschaft, dass er schnell abbindet und dann bei Mikrowellenmessungen oder HF-Messungen kaum noch messbar ist.

Aus US 4,389,969 ist eine Vorrichtung zur Überwachung eines Leimauftrags auf einen sich bewegenden Kastenrohling bekannt, welche eine Kapazitätsvorrichtung aufweist, deren eine Platte in der Nähe des Transportwegs des Kastenrohlings angeordnet ist, und deren andere Platte durch die Oberfläche des Kastenrohlings und des aufgetragenen Leims gebildet wird. Diese beiden Flächen bilden zusammen eine Kapazität, die Teil eines RC-Glieds sind, welcher über einen Pufferverstärker mit einem 100 kHz-Signal beaufschlagt wird, während ein zweiter Pufferverstärker das abgeschwächte Signal ausgangs des RC-Glieds umwandelt. Der Absolutbetrag der Abschwächung wird als Maß für den Leimauftrag verwendet. Voraussetzung für diese Messung ist der flächige Auftrag des Leims auf den Kastenrohling, um eine Gegenelektrode zu bilden.

DE 195 05 453 A1 offenbart einen Klebemonitor, der auf dem Prinzip beruht, dass aufzubringender Klebstoff als Sendeelektrode einer HF-Welle benutzt wird. Eine leitende Aufbringungsdüse ist dabei mit einer Überträgereinheit der HF-Welle verbunden, so dass der von der Aufbringungsdüse ausgegebene Klebstoff als Überträgerelektrode der HF-Welle wirkt. Eine erste Elektrode empfängt die HF-Welle von dem ausgegebenen Klebstoff. Eine zweite Elektrode ist nahe der ersten Elektrode, aber entfernter vom Klebstoff angeordnet, um so eine geringere Menge der HF-Welle, die von dem ausgegebenen Klebstoff übertragen wird, zu empfangen als die erste Elektrode. Eine gewünschte Aufbringung des Klebstoffs auf dem zu klebenden Objekt wird durch das Detektieren der Differenz in dem Ausgang zwischen den ersten und den zweiten Elektroden beobachtet. Die räumliche Nähe der beiden Elektroden zueinander unterdrückt Umgebungsrauschen, welches bei der Differenzbildung zum Teil entfällt.

Demgegenüber liegt der vorliegenden Erfindung die Aufgabe zugrunde, die Überwachung von Materialeigenschaften eines Filterstrangs weiter zu verbessern.

Diese Aufgabe wird gelöst durch ein Verfahren zum Überwachen eines aus einem Filtertowmaterial hergestellten endlosen Filterstrangs der Tabak verarbeitenden Industrie, der aus einem mit einem Umhüllungspapierstreifen umwickelten zu einem Endlosstrang geformten Filtertowmaterial, insbesondere aus einem mit einem Weichmacher behandelten Zelluloseacetat, hergestellt ist, wobei der Umhüllungspapierstreifen mit einem an einer Innenseite des Umhüllungspapierstreifens aufgetragenen Leim mit dem Filtertowmaterial verklebt ist, wobei der mit dem Umhüllungspapierstreifen umhüllte endlose Filterstrang zur Überwachung durch eine kapazitive HF-Strangmessvorrichtung gefördert wird, in der ein von Materialeigenschaften des Filterstrangs abhängiges HF-Messsignal gemessen wird, bei dem aus dem HF-Messsignal ein Imaginärteil einer Permittivität des Filterstrangs ermittelt wird und aus dem ermittelten Imaginärteil der Permittivität eine Menge des auf das Umhüllungspapier aufgetragenen Leims ermittelt wird, wobei der Leim mittels einer kreiselförmigen Bewegung einer Spindüse in einer schleifenförmigen Leimspur auf das Umhüllungspapier aufgebracht wird, wobei vor Beginn einer Regelproduktion eines Filterstrangs eine Einstellung der kreiselförmigen Bewegung der Spindüse auf den verwendeten Leim und die verwendete Leimmenge durchgeführt wird, wobei die Schwankung der Leimmenge in Abhängigkeit von der Einstellung der Spindüse ermittelt wird und die Spindüse so eingestellt wird, dass Schwankungen aufgrund der kreisförmigen Bewegung durch Überlappung der Leimspur in aufeinanderfolgenden Schleifen minimiert werden.

Die Erfindung beruht auf der Grunderkenntnis, dass ein noch nicht abgebundener Leim, insbesondere Kaltleim, in einem frühen Stadium der Filterstrangherstellung, noch vor dem Ablängen von Filterstäben von dem endlosen Filterstrang, einen starken Einfluss auf den Imaginärteil der Permittivität des Filterstrang im HF-Frequenzbereich hat und aufgrund der geringen bis verschwindenden Beiträge der anderen im Filterstrang vorhandenen Materialien hierauf ein sehr sauberes Signal für die Menge des aufgetragenen Leims darstellt. Diese Messung kann alleine oder zusätzlich zu einer Mikrowellenstrahlenmessung erfolgen.

Im Rahmen der vorliegenden Erfindung werden Hochfrequenzen (HF) als Frequenzen unterhalb des Bereichs der Mikrowellenfrequenzen verstanden, wobei die Schwelle bei ca. 300 MHz bis 1 GHz liegt.

Entsprechende kapazitive HF-Messeinrichtungen und Mikrowellenmesseinrichtungen sind bekannt. Eine kombinierte kapazitive HF- und Mikrowellenstrangmessvorrichtung ist beispielsweise in der deutschen Patentanmeldung DE 10 2012 209 954 A1 der Anmelderin beschrieben. Weitere Beispiele von Mikrowellenstrangmessvorrichtungen und kapazitiven HF-Strangmessvorrichtungen sind auch aus den deutschen Patentanmeldungen DE 10 2011 083 049 A1 und DE 10 2011 083 052 A1 der Anmelderin bekannt. Der Offenbarungsgehalt dieser Voranmeldungen soll durch Bezugnahme vollinhaltlich in der vorliegenden Anmeldung aufgenommen sein.

In der Praxis wurden bislang nur die Imaginärteile und Realteile der Permittivität bei der Mikrowellenfrequenz und der Realteil der Permittivität bei der Hochfrequenz verwendet, da der Imaginärteil der Permittivität durch die im Filterstrang vorhandenen Materialien, insbesondere Celluloseazetat, Triacetin und Wasser, im HF-Bereich nicht beeinflusst wird. Der Effekt des Leims auf diese Messungen war zuvor noch nicht untersucht worden.

Das HF-Messsignal weist eine Frequenz zwischen 10 kHz und 300 MHz, vorzugsweise zwischen 1 MHz und 15 MHz, auf.

Vorteilhafterweise wird zusätzlich ein Realteil der Permittivität des Filterstrangs ermittelt. Weiter vorteilhafterweise wird der mit dem Umhüllungspapierstreifen umwickelte Filterstrang zusätzlich durch eine Mikrowellenstrangmessvorrichtung gefördert und ein Realteil und/oder ein Imaginärteil der Permittivität des Filterstrangs bei einer Mikrowellenfrequenz ermittelt, insbesondere zwischen 1 GHz und 30 GHz, vorzugsweise zwischen 4 GHz und 8 GHz.

So ist es weiter vorzugsweise vorgesehen, zusätzlich zur Leimmenge auch eine Dichte des Filtertowmaterials im Filterstrang, eine Feuchtigkeit des Filterstrangs, eine Menge an Weichmacher im Filterstrang und/oder Fremdkörper im Filterstrang zu ermittelt oder erkennen.

Als Leim wird vorteilhafterweise ein Kaltleim auf den Umhüllungspapierstreifen aufgetragen, wobei der Leim insbesondere auf einer Copolymerbasis oder auf einer Basis von Polyvinylacetat beruht. Mit diesem Leim lässt sich ein vorteilhafter linearer bis fast linearer Zusammenhang zwischen dem Messsignal und der aufgetragenen Leimmenge realisieren, der eine einfache Kalibration der Messvorrichtung ermöglicht.

Vorteilhafterweise werden Schwankungen im Leimauftrag, insbesondere Schwankungen einer aufgetragenen Leimmenge und/oder Schwankungen in einer Gleichmäßigkeit einer Leimspur, ermittelt, wobei die ermittelten Schwankungen insbesondere mit einem oder mehreren Schwankungsgrenzwerten verglichen werden und bei Überschreiten des Schwankungsgrenzwerts oder der Schwankungsgrenzwerte anschließend abgelängte Filterstäbe oder Filterzigaretten, die nicht grenzwertkonform sind, von der weiteren Verarbeitung ausgeschlossen werden.

Eine besonders präzise Messung wird erreicht, wenn vorteilhafterweise vor Beginn einer Regelproduktion eines endlosen Filterstrangs eine Kalibration durchgeführt wird, bei der eine auf den Umhüllungspapierstreifen aufgebrachte Leimmenge in zwei oder mehr Schritten oder zeitlich kontinuierlich erhöht wird und der ermittelte Imaginärteil der Permittivität des Filterstrangs bei der HF-Frequenz, und insbesondere zusätzlich die weiter ermittelten Anteile der Permittivität bei der HF-Frequenz und gegebenenfalls der Mikrowellenfrequenz, in Abhängigkeit von der eingestellten Leimmenge ermittelt wird oder werden und aus der ermittelten Abhängigkeit von der Leimmenge Kalibrationsdaten für die Messung bei der späteren Regelproduktion ermittelt werden.

Dies kann bei einer Kalibration, die auch die weiteren ermittelten Größen wie Dichte des Filterstrangs, Menge an Weichmacher und Feuchtigkeit umfasst, auch auf diese weiteren Messgrößen ausgeweitet werden, sodass Einflüsse der Leimmenge auf die Messung bzw. Bestimmung der anderen Größen minimiert werden.

Erfindungsgemäß wird der Leim mittels einer kreiselförmigen Bewegung einer Spindüse in einer schleifenförmigen Leimspur auf das Umhüllungspapier aufgebracht, wobei vor Beginn einer Regelproduktion eines Filterstrangs eine Einstellung der kreiselförmigen Bewegung der Spindüse auf den verwendeten Leim und die verwendete Leimmenge durchgeführt wird, wobei die Schwankung der Leimmenge in Abhängigkeit von der Einstellung der Spindüse ermittelt wird und die Spindüse so eingestellt wird, dass Schwankungen aufgrund der kreisförmigen Bewegung durch Überlappung der Leimspur in aufeinanderfolgenden Schleifen minimiert werden. Auf diese Weise kann während eines der Regelproduktion vorausgehenden Einstellungsschritts die Einstellung sowohl der Leimmenge als auch der Kreiselbewegungen der Spindüse vorgenommen werden, während gleichzeitig ein Messsignal von der HF-Strangmessvorrichtung angezeigt wird, welches die Regelmäßigkeit oder Unregelmäßigkeit des Leimauftrags klar wiedergibt. Das Einstellungsziel ist ein möglichst gleichmäßiger Leimauftrag, der dann entsteht, wenn die einzelnen Schleifen der Leimspur einander überlappen. Gleichzeitig sollte der Leimfluss durch die Düse möglichst gleichmäßig sein, um nicht entweder Stellen mit unzureichendem Leimauftrag oder mit übermäßigem Leimauftrag auf dem Umhüllungspapierstreifen zu erzeugen.

Die der Erfindung zugrunde liegende Aufgabe wird auch durch eine Vorrichtung zum Herstellen eines aus einem Filtertowmaterial hergestellten Filterstrangs der Tabak verarbeitenden Industrie, umfassend eine Fördervorrichtung für ein Filtertowmaterial mit einem Förderweg von einem Filtertowvorrat durch eine Strangformungsvorrichtung zu einer Schneidvorrichtung, einen Umhüllungspapiervorrat und eine Beleimungsvorrichtung zur Beleimung einer Innenseite eines vom Umhüllungspapiervorrat abgezogenen Umhüllungspapierstreifens, der in oder nach der Strangformungsvorrichtung um das stranggeformte Filtertowmaterial gewickelt wird, sowie eine kapazitive HF-Strangmessvorrichtung, die eingerichtet und ausgebildet ist, ein HF-Messsignal in Anwesenheit des Filterstrangs zu messen und eine Auswerteeinheit, wobei die Auswerteeinheit eingerichtet und ausgebildet ist, aus einer Veränderung des HF-Messsignals einen Imaginärteil einer Permittivität des Filterstrangs zu ermitteln und aus dem ermittelten Imaginärteil der Permittivität des Filterstrangs eine Menge des auf den Umhüllungspapierstreifen aufgetragenen Leims zu ermitteln, wobei die Beleimungsvorrichtung als als Spindüse ausgebildete Leimdüse zum Auftragen einer schleifenförmigen Leimspur auf den Umhüllungspapierstreifen ausgebildet ist und die Vorrichtung ausgebildet und eingerichtet ist, das zuvor beschriebene erfindungsgemäße Verfahren auszuführen.

Damit verwirklicht die erfindungsgemäße Vorrichtung die gleichen Merkmale, Vorteile und Eigenschaften wie das zuvor beschriebene erfindungsgemäße Verfahren.

Die Vorrichtung ist ausgebildet und eingerichtet, das zuvor beschriebene erfindungsgemäße Verfahren auszuführen. Hierzu ist beispielsweise die Auswerteeinheit als programmierbare Datenverarbeitungsanlage ausgeführt, die auch Funktionen der Verfahrenssteuerung übernimmt und mittels einer darin gespeicherten Software beim Abarbeiten derselben das erfindungsgemäße Verfahren ausführt.

In einer vorteilhaften Weiterbildung ist eine Mikrowellenstrangmessvorrichtung umfasst, durch die der Förderweg des Filterstrangs vor dem Ablängen von Filterstäben verläuft, wobei insbesondere die kapazitive HF-Strangmessvorrichtung und die Mikrowellenstrangmessvorrichtung eine im Wesentlichen gleiche Feldgeometrie und/oder ein im Wesentlichen gleiches Messvolumen aufweisen. Damit wird sichergestellt, dass die Messsignale aus der kapazitiven HF-Strangmessvorrichtung und der Mikrowellenstrangmessvorrichtung optimal miteinander vergleichbar sind.

Die Beleimungsvorrichtung ist vorzugsweise als Leimdüse, insbesondere als Spindüse, zum Auftragen einer, insbesondere schleifenförmigen, Leimspur auf den Umhüllungspapierstreifen ausgebildet. Hiermit wird ein besonders gleichmäßiger berührungsloser Auftrag von Leim ermöglicht.

Die Auswerteeinheit ist vorzugsweise zusätzlich zum Ansteuern einer Ausschussvorrichtung ausgebildet. Auf diese Weise ist es möglich, Filterstäbe von der weiteren Verarbeitung auszuschließen, die nicht grenzwertkonforme Unregelmäßigkeiten im Leimauftrag und somit in der Verklebung aufweisen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1     eine schematische Darstellung einer erfindungsgemäßen Vorrichtung,

Fig. 2     grafische Darstellungen der Abhängigkeit des Imaginärteils der Permittivität im HF-Frequenzbereich für verschiedene Materialien und

Fig. 3     den Einfluss verschiedener Leimspuren auf ein Messsignal einer erfindungsgemäß betriebenen kapazitiven HF-Strangmessvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

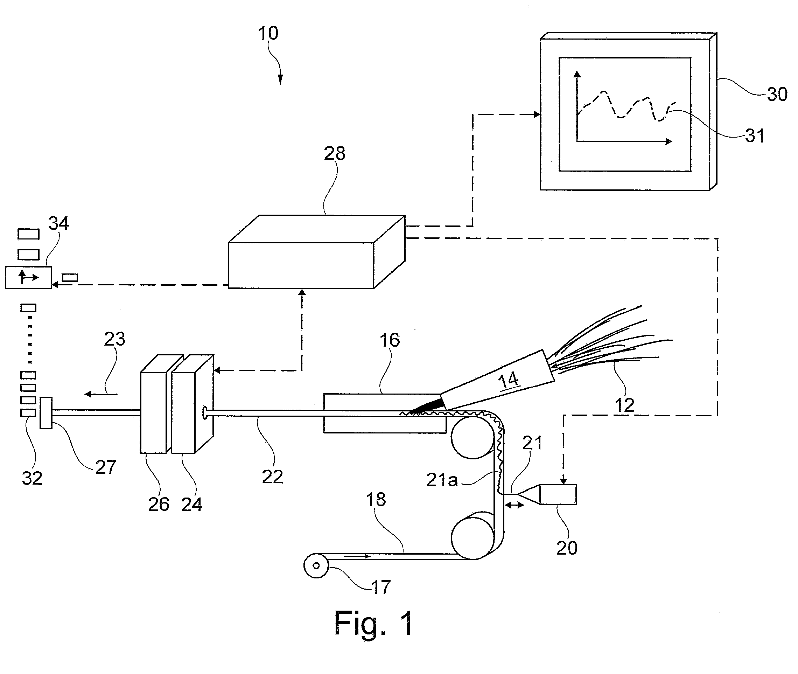

Figur 1 zeigt schematisch eine erfindungsgemäße Vorrichtung 10 im Ausschnitt. Es handelt sich um eine Filterstrangvorrichtung. Nicht dargestellt ist in Figur 1, dass das Filtertowmaterial 12 in einem Towballen als Vorrat bereitgestellt wird, als Filtertowstreifen von dem Towballen abgezogen wird, ausgebreitet und gereckt und mit Weichmacher beaufschlagt wird. In Figur 1 ist dargestellt, wie das noch lose Filtertowmaterial 12 in einen Toweinlauf 14 eintritt und in einer schematisch dargestellten Strangformungsvorrichtung 16 zu einem zylindrischen Endlosstrang geformt wird. In der Strangformungsvorrichtung 16 wird das Filtertowmaterial 12 mit einem Umhüllungspapierstreifen 18 umhüllt, das zuvor von einer Bobine als Umhüllungspapierstreifenvorrat 17 abgezogen worden war und mittels einer Leimdüse 20 berührungslos mit Leim 21 in einer Leimspur 21a beaufschlagt worden ist. Im gezeigten Ausführungsbeispiel handelt es sich um eine rotierende Spindüse, die eine schleifenförmige Leimspur 21a auf der Innenseite des sich linear bewegenden Umhüllungspapierstreifens 18 erzeugt. Der fertige Filterstrang 22 tritt in Förderrichtung 23 aus der Strangformungsvorrichtung 16 aus und in eine kapazitive HF-Strangmess-vorrichtung 24 ein. Dieser ist in dem Ausführungsbeispiel gemäß Figur 1 eine im Rahmen der vorliegenden Erfindung optionale Mikrowellenstrangmessvorrichtung nachgelagert angeordnet. Diese Strangmessvorrichtungen 24, 26 messen die dielektrischen Eigenschaften des Filterstrangs 22 bei einer Frequenz im Hochfrequenzbereich und einer Frequenz im Mikrowellenbereich.

Anschließend gelangt der Filterstrang 22 zu einer Schneidvorrichtung 27, die einzelne einfach lange oder doppelt lange Filterstäbe 32 ablängt bzw. abschneidet. Diese können entweder längsaxial oder, wie dargestellt, queraxial weiter gefördert werden, im Regelfall zu einer Filteransatzmaschine. In Förderrichtung stromabwärts ist eine Ausschussvorrichtung 34 angeordnet, durch die die Filterstäbe 32 gefördert werden, und die von der Steuer- und Auswertevorrichtung 28 angesteuert wird, um nicht spezifikationskonforme Filterstäbe 32 auszuschießen und so von der weiteren Verarbeitung auszuschließen.

Die Auswertevorrichtung 28 erhält hierfür die Messsignale von der HF-Strangmessvorrichtung 24 und der Mikrowellenstrangmessvorrichtung 26 und steuert in Abhängigkeit hiervon nicht nur die Ausschussvorrichtung 34, sondern auch den Leimauftrag über die Leimdüse 20. Die Messsignale können auf einer mit der Auswertevorrichtung 28 verbundenen Anzeigevorrichtung 30 dargestellt werden.

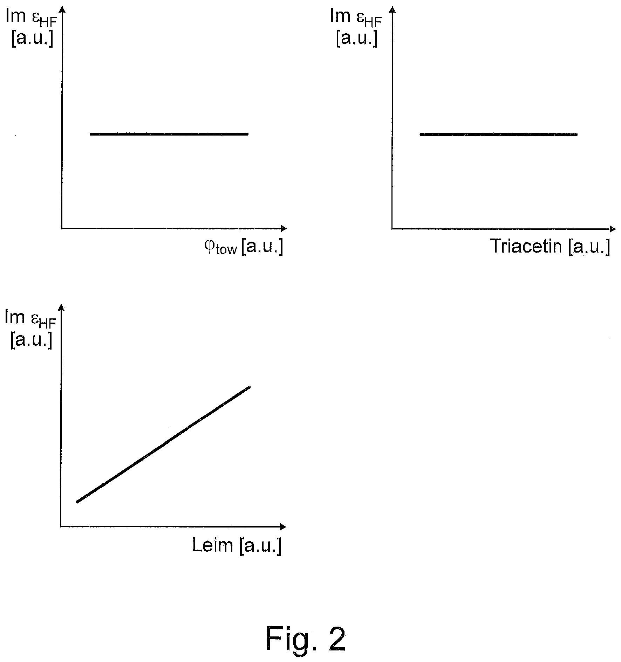

In Figur 2 ist die Abhängigkeit des Imaginärteils der Permittivität im HF Frequenzbereich für verschiedene Materialien, die in Filtersträngen der Tabak verarbeitenden Industrie vorkommen, grafisch dargestellt. Jeweils auf der vertikalen Achse ist der Wert des Imaginärteils der Permittivität in willkürlichen Einheiten aufgetragen, während auf der horizontalen Achse in den oberen beiden Diagrammen zum einen die Dichte des Filtertows und zum anderen die Menge an Triacetin aufgetragen ist, während in dem unteren Diagramm die Leimmenge aufgetragen ist. Schematisch vereinfacht ergibt sich eine im wesentlichen vollständige Unabhängigkeit des Wertes des Imaginärteils der Permittivität in Abhängigkeit von der Towdichte und der Menge an Weichmacher, während sich ein im Wesentlichen linearer Zusammenhang mit der Leimmenge einstellt. Da die Messungen an einem querschnittskonstanten zylindrischen Endlosstrang erfolgt, ist die Dichte des Filtertows gleichbedeutend mit der Masse an Filtertow bzw. Zelluloseacetat. Auch die Feuchtigkeit hat einen verschwindenden Einfluss auf das Messergebnis des Imaginärteils der Permittivität im HF-Frequenzbereich.

Ein mathematischer Ansatz wird im folgenden kurz skizziert. Derzeit werden an Filtermaschinen maximal 2 Sensoren eingesetzt, nämlich eine kapazitive HF-Strangmessvorrichtung und eine Mikrowellenstrangmessvorrichtung. Solche Systeme sind auch unter den Bezeichnungen HiFas und Midas der Anmelderin erhältlich. Beide Sensoren liefern, nach einfacher mathematischer Umformung, den Realteil und Imaginärteil der effektiven Permittivität des sich im Messfenster des jeweiligen Sensors befindenden Objekts. Es kann folgendes Gleichungssystem aufgestellt werden:

$$\begin{pmatrix} Re(\varepsilon_{MW}) \\ Im(\varepsilon_{MW}) \\ Re(\varepsilon_{HF}) \\ Im(\varepsilon_{HF}) \end{pmatrix} = \begin{bmatrix} M_{11} & M_{12} & M_{13} & A \\ M_{21} & M_{22} & M_{23} & B \\ M_{31} & M_{32} & M_{33} & C \\ {\sim}0 & {\sim}0 & {\sim}0 & D \end{bmatrix} * \begin{pmatrix} T \\ \Delta\rho \\ \Delta Feuchte \\ L \end{pmatrix} + \begin{pmatrix} Re(\varepsilon_{MW})_0 \\ Im(\varepsilon_{MW})_0 \\ Re(\varepsilon_{HF})_0 \\ Im(\varepsilon_{HF})_0 \end{pmatrix}$$

Dabei beschreiben die Matrixeinträge $M_{ii}$ den Einfluss von Triacetin (T), Dichte (p) und Feuchte auf den Realteil und Imaginärteil der Permittivität bei der gewählten HF-Frequenz ($\varepsilon_{HF}$) und der gewählten Mikrowellenfrequenz ($\varepsilon_{MW}$).

Dieser 3x3-Block war auch bislang bereits verwendet worden, um Strangdichte, Strangfeuchte und Weichmachermenge im Filterstrang zu ermitteln. Der Imaginärteil bei Hochfrequenz blieb dabei aufgrund der verschwindenden Anteile von Weichmacher, Strangdichte und Strangfeuchte zu diesem Parameter außen vor.

Die Hinzufügung der Bestimmung des Imaginärteils der Permittivität bei der gewählten HF-Frequenz fügt nun einen Beitrag aufgrund der Leimmenge (L) hinzu, der die gezeigte 3x3-Matrix zu einer 4x4-Matrix erweitert. Die unterste Zeile enthält dabei die Beiträge nahe Null, die Triacetin, Zelluloseacetat und Wasser zum Imaginärteil der effektiven Permittivität bei Hochfrequenz leisten. Es ergibt sich somit ein sehr sauberes Signal mit dem Faktor D in diesem Imaginärteil aufgrund der Leimmenge L.

Das Gleichungssystem umfasst außerdem einen konstanten Teil, der einen Nullwert repräsentiert. In diesem konstanten Vektor sind die Werte der Realteile und Imaginärteile der effektiven Permittivität bei der gewählten Hochfrequenz und der gewählten Mikrowellenfrequenz abgelegt, die sich ergeben, wenn eine Leermessung gemacht wird, bei der der Filterstrang im Wesentlichen unbehandelt ist, also eine Regeldichte und eine Regelfeuchte aufweist, jedoch kein Triacetin und keinen Leim enthält. Die Matrixeinträge $M_{ii}$ sind üblicherweise bekannt oder können nachkalibriert werden. Die Kalibration der nicht vernachlässigbaren Beiträge A, B, C, D des Kaltleims zu den Realteilen und Imaginärteilen der effektiven Permittivität bei den verschiedenen Frequenzen kann durch Messungen bei verschiedenen Leimmengen erfolgen.

Dieses Gleichungssystem nimmt lineare Abhängigkeiten an, die in guter Näherung gegeben sind.

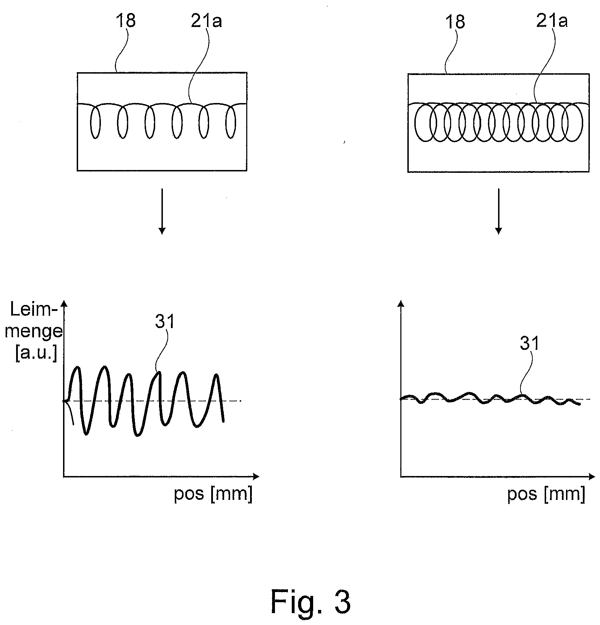

In Figur 3 ist der Einfluss verschiedener Leimspuren auf das Messsignal einer erfindungsgemäß betriebenen kapazitiven HF-Strangmessvorrichtung 10 dargestellt. Im oberen Teil der Figur 3 sind nebeneinander 2 Leimspuren 21a aus Kaltleim auf einem Umhüllungspapierstreifen 18 dargestellt, die mit unterschiedlichen Einstellungen einer Spindüse erzeugt worden sind. Die kreisförmige Bewegung der Spindüse führt zu einer schleifenförmigen Leimspur 21a auf dem sich mit gleichmäßiger Geschwindigkeit an der Spindüse vorbeibewegenden Umhüllungspapierstreifen 18. Der Öffnungskegel der kreisförmigen Bewegung lässt sich einstellen. Die Geschwindigkeit der Kreiselbewegung hängt von Leimmenge, Druck und Viskosität des verwendeten Leims ab und muss vor dem Beginn der Regelproduktion des Filterstrangs geeignet eingestellt werden. Im oberen linken Teilbild sind nicht überlappende Schleifen aufgrund einer nicht idealen Einstellung der Spindüse gezeigt, während die Schleifen im rechten oberen Teilbild in Figur 3 eine wünschenswerte Überlappung zeigen, die für einen sehr gleichmäßigen Leimauftrag sorgt. Unterhalb der beiden oberen Teilbilder ist grafisch dargestellt, wie die Leimmenge sich zu den oberen Beispielen als Funktion der Position auf dem Umhüllungspapierstreifen im Messsignal 31 darstellt. Die nicht überlappenden Schleifen im linken Teilbild führen zu einem starken Ausschlag des Messsignals 31, während die überlappenden Schleifen des rechten oberen Teilbildes zu einer sehr gleichmäßigen Verteilung der Leimmenge und somit zu einem wenig schwankenden Messsignal 31 führen.

Da dieses Messsignal 31 online und ohne Zeitverzögerung zur Verfügung steht, ist es hiermit sehr einfach möglich, die Einstellung der Spindüse so auf den gewählten Leim und die gewählte Leimmenge einzustellen, dass sich ein gutes und gleichmäßiges Leimspurbild ergibt.

Bezugszeichenliste

| | |
|---|---|
| 10 | Filterstrangvorrichtung |
| 12 | Filtertowmaterial |
| 14 | Toweinlauf |
| 16 | Strangformungsvorrichtung |
| 17 | Umhüllungspapierstreifenvorrat |
| 18 | Umhüllungspapierstreifen |
| 20 | Leimdüse |
| 21 | Leim |
| 21a | Leimspur |
| 22 | Filterstrang |
| 23 | Förderrichtung |
| 24 | kapazitive HF-Strangmessvorrichtung |
| 26 | Mikrowellenstrangmessvorrichtung |
| 27 | Schneidvorrichtung |
| 28 | Steuer- und Auswertevorrichtung |
| 30 | Anzeigevorrichtung |
| 31 | Messsignal |
| 32 | abgelängte Filterstäbe |
| 34 | Ausschussvorrichtung |

**Patentansprüche**

1. Verfahren zum Überwachen eines aus einem Filtertowmaterial (12) hergestellten endlosen Filterstrangs (22) der Tabak verarbeitenden Industrie, der aus einem mit einem Umhüllungspapierstreifen (18) umwickelten zu einem Endlosstrang geformten Filtertowmaterial (12) hergestellt ist, wobei der Umhüllungspapierstreifen (18) mit einem an einer Innenseite des Umhüllungspapierstreifens (18) aufgetragenen Leim (21) mit dem Filtertowmaterial (12) verklebt ist, wobei der mit dem Umhüllungspapierstreifen (18) umhüllte endlose Filterstrang (22) zur Überwachung durch eine kapazitive HF-Strangmessvorrichtung (24) gefördert wird, in der ein von Materialeigenschaften des Filterstrangs (22) abhängiges HF-Messsignal gemessen wird, **dadurch gekennzeichnet, dass** aus dem HF-Messsignal ein Imaginärteil einer Permittivität des Filterstrangs (22) ermittelt wird und aus dem ermittelten Imaginärteil der Permittivität eine Menge des auf das Umhüllungspapier (18) aufgetragenen Leims (21) ermittelt wird, wobei der Leim (21) mittels einer kreiselförmigen Bewegung einer Spindüse in einer schleifenförmigen Leimspur (21a) auf das Umhüllungspapier (18) aufgebracht wird, wobei vor Beginn einer Regelproduktion eines Filterstrangs (22) eine Einstellung der kreiselförmigen Bewegung der Spindüse auf den verwendeten Leim (21) und die verwendete Leimmenge durchgeführt wird, wobei die Schwankung der Leimmenge in Abhängigkeit von der Einstellung der Spindüse ermittelt wird und die Spindüse so eingestellt wird, dass Schwankungen aufgrund der kreisförmigen Bewegung durch Überlappung der Leimspur (21a) in aufeinanderfolgenden Schleifen minimiert werden.

2. Verfahren nach Anspruch 1, **dadurch gekennzeichnet, dass** das HF-Messsignal eine Frequenz zwischen 10 kHz und 300 MHz, insbesondere zwischen 1 MHz und 15 MHz, aufweist.

3. Verfahren nach Anspruch 1, **dadurch gekennzeichnet, dass** zusätzlich ein Realteil der Permittivität des Filterstrangs (22) ermittelt wird.

4. Verfahren nach einem der Ansprüche 1 bis 3, **dadurch gekennzeichnet, dass** der mit dem Umhüllungspapierstreifen (18) umwickelte Filterstrang (22) zusätzlich durch eine Mikrowellenstrangmessvorrichtung (26) gefördert wird und ein Realteil und/oder ein Imaginärteil der Permittivität des Filterstrangs (22) bei einer Mikrowellenfrequenz ermittelt wird, insbesondere zwischen 1 GHz und 30 GHz, insbesondere zwischen 4 GHz und 8 GHz.

5. Verfahren nach einem der Ansprüche 1 bis 4, **dadurch gekennzeichnet, dass** zusätzlich zur Leimmenge auch eine Dichte des Filtertowmaterials (12) im Filterstrang (22), eine Feuchtigkeit des Filterstrangs (22), eine Menge an Weichmacher im Filterstrang (22) und/oder Fremdkörper im Filterstrang (22) ermittelt oder erkannt wird oder werden.

6. Verfahren nach einem der Ansprüche 1 bis 5, **dadurch gekennzeichnet, dass** als Leim (21) ein Kaltleim auf den Umhüllungspapierstreifen (18) aufgetragen wird, wobei der Leim (21) insbesondere auf einer Copolymerbasis oder auf einer Basis von Polyvinylacetat beruht.

7. Verfahren nach einem der Ansprüche 1 bis 6, **dadurch gekennzeichnet, dass** Schwankungen im Leimauftrag, insbesondere Schwankungen einer aufgetragenen Leimmenge und/oder Schwankungen in einer Gleichmäßigkeit einer Leimspur (21a), ermittelt werden, wobei die ermittelten Schwankungen insbesondere mit einem oder mehreren Schwankungsgrenzwerten verglichen werden und bei Überschreiten des Schwankungsgrenzwerts oder der Schwankungsgrenzwerte anschließend abgelängte Filterstäbe (32) oder Filterzigaretten, die nicht grenzwertkonform sind, von der weiteren Verarbeitung ausgeschlossen werden.

8. Verfahren nach einem der Ansprüche 1 bis 7, **dadurch gekennzeichnet, dass** vor Beginn einer Regelproduktion eines endlosen Filterstrangs (22) eine Kalibration durchgeführt wird, bei der eine auf den Umhüllungspapierstreifen (18) aufgebrachte Leimmenge in zwei oder mehr Schritten oder zeitlich kontinuierlich erhöht wird und der ermittelte Imaginärteil der Permittivität des Filterstrangs (22) bei der HF-Frequenz, und insbesondere zusätzlich die weiter ermittelten Anteile der Permittivität bei der HF-Frequenz und gegebenenfalls der Mikrowellenfrequenz, in Abhängigkeit von der eingestellten Leimmenge ermittelt wird oder werden und aus der ermittelten Abhängigkeit von der Leimmenge Kalibrationsdaten für die Messung bei der späteren Regelproduktion ermittelt werden.

9. Vorrichtung (10) zum Herstellen eines aus einem Filtertowmaterial (12) hergestellten Filterstrangs der Tabak verarbeitenden Industrie, umfassend eine Fördervorrichtung für ein Filtertowmaterial (12) mit einem Förderweg von einem Filtertowvorrat durch eine Strangformungsvorrichtung (16) zu einer Schneidvorrichtung (27), einen Umhüllungspapiervorrat und eine Beleimungsvorrichtung (20) zur Beleimung einer Innenseite eines vom Umhüllungspapiervorrat abgezogenen Umhüllungspapierstreifens (18), der in oder nach der Strangformungsvorrichtung (16) um das stranggeformte Filtertowmaterial (12) gewickelt wird, sowie eine kapazitive HF-Strangmessvorrichtung (24), die eingerichtet und ausgebildet ist, ein HF-Messsignal in Anwesenheit des Filterstrangs (22) zu messen und eine Auswerteeinheit (28), **dadurch gekennzeichnet, dass** die Auswerteeinheit (28) eingerichtet und ausgebildet ist, aus einer Veränderung des HF-Messsignals einen Imaginärteil einer Permittivität des Filterstrangs (22) zu ermitteln und aus dem ermittelten Imaginärteil der Permittivität des Filterstrangs (22) eine Menge des auf den Umhüllungspapierstreifen (18) aufgetragenen Leims (21) zu ermitteln, wobei die Beleimungsvorrichtung als als Spindüse ausgebildete Leimdüse (20) zum Auftragen einer schleifenförmigen Leimspur (21a) auf den Umhüllungspapierstreifen (18) ausgebildet ist und die Vorrichtung (10) ausgebildet und eingerichtet ist, ein Verfahren nach einem der Ansprüche 1 bis 8 auszuführen.

10. Vorrichtung (10) nach Anspruch 9, **dadurch gekennzeichnet, dass** eine Mikrowellenstrangmessvorrichtung (26) umfasst ist, durch die der Förderweg des Filterstrangs (22) vor dem Ablängen von Filterstäben (32) verläuft, wobei insbesondere die kapazitive HF-Strangmessvorrichtung (24) und die Mikrowellenstrangmessvorrichtung (26) eine im Wesentlichen gleiche Feldgeometrie und/oder ein im Wesentlichen gleiches Messvolumen aufweisen.

11. Vorrichtung (10) nach Anspruch 9 oder 10, **dadurch gekennzeichnet, dass** die Auswerteeinheit (28) zum Ansteuern einer Ausschussvorrichtung (34) ausgebildet ist.

## Claims

1. A method for the monitoring of an endless filter rod (22) produced from a filter tow material (12) of the tobacco processing industry, which is produced from a filter tow material (12) wrapped with a wrapping paper strip (18) shaped to form an endless rod, wherein the wrapping paper strip (18) is adhesively bonded to the filter tow material (12) with a glue (21) applied to an inside of the wrapping paper strip (18), wherein the endless filter rod (22) enveloped with the wrapping paper strip (18) is conveyed for monitoring through a capacitive HF rod measuring device (24), in which a HF measuring signal dependent on material properties of the filter rod (22) is measured, **characterized in that** an imaginary part of a permittivity of the filter rod (22) is determined from the HF measuring signal and a quantity of the glue (21) applied to the wrapping paper (18) is determined from the determined imaginary part of the permittivity, wherein the glue (21) is applied by means of a centrifugal movement of a spin nozzle in a loop-shaped glue track (21a) to the wrapping paper (18), wherein prior to the start of a regular production of a filter rod (22), an adjustment of the centrifugal movement of the spin nozzle to the glue (21) used and the glue quantity used is performed, wherein the fluctuation of the glue quantity is determined as a function of the adjustment of the spin nozzle and the spin nozzle is adjusted such that fluctuations due to the circular movement are minimized by overlapping the glue track (21a) in successive loops.

2. The method according to Claim 1, **characterized in that** the HF measuring signal has a frequency between 10 kHz and 300 MHz, in particular between 1 MHz and 15 MHz.

3. The method according to Claim 1, **characterized in that** a real part of the permittivity of the filter rod (22) is additionally determined.

4. The method according to any one of Claims 1 to 3, **characterized in that** the filter rod (22) wrapped with the wrapping paper strip (18) is additionally conveyed through a microwave rod measuring device (26) and a real part and/or an imaginary part of the permittivity of the filter rod (22) is determined at a microwave frequency, in particular between 1 GHz and 30 GHz, in particular between 4 GHz and 8 GHz.

5. The method according to any one of Claims 1 to 4, **characterized in that**, in addition to the quantity of glue, a density of the filter tow material (12) in the filter rod (22), a moisture of the filter rod (22), a quantity of plasticizer in the filter rod (22) and/or nontobacco related materials in the filter rod (22) is or are also determined or recognized.

6. The method according to any one of Claims 1 to 5, **characterized in that** a cold glue is applied to the wrapping paper strip (18) as the glue (21), wherein the glue (21) is in particular based on a copolymer or based on polyvinyl acetate.

7. The method according to any one of Claims 1 to 6, **characterized in that** fluctuations in the glue application, in particular fluctuations in an applied quantity of glue and/or fluctuations in a uniformity of a glue track (21a) are determined, wherein the determined fluctuations are in particular compared with one or more fluctuation limits and in the event of the fluctuation limit or fluctuation limits being exceeded, cut-tolength filter rods (32) or filter cigarettes, which do not comply with the limits, are subsequently excluded from the further processing.

8. The method according to any one of Claims 1 to 7, **characterized in that**, prior to the start of a regular production of an endless filter rod (22), a calibration is performed, in which a quantity of glue applied to the wrapping paper strip (18) is increased in two or more steps or continually in time, and the determined imaginary part of the permittivity of the filter rod (22) at the HF frequency, and in particular additionally the further determined proportions of the permittivity at the HF frequency and, if applicable, of the microwave frequency, as a function of the adjusted quantity of glue is or are determined, and calibration data are determined for the measurement during the subsequent regular production from the determined dependency of the quantity of glue.

9. A device (10) for the production of a filter rod (22) produced from a filter tow material (12) of the tobacco processing industry, comprising a conveying device for a filter tow material (12) with a conveying path from a filter tow supply through a rod shaping device (16) to a cutting device (27), a wrapping paper supply and a gluing device (20) for gluing an inner side of a wrapping paper strip (18) extracted from the wrapping paper supply, which is wrapped around the rod-shaped filter tow material (12) in or after the rod shaping device (16), as well as a capacitive HF rod measuring device (24) which is designed and configured to measure a HF measuring signal in the presence of the filter rod (22) and an evaluation unit (28), **characterized in that** the evaluation unit (28) is designed and configured to determine an imaginary part of a permittivity of the filter rod (22) from a change in the HF measuring signal and to determine a quantity of the glue (21) applied to the wrapping paper strip (18) from the determined imaginary part of the permittivity of the filter rod (22), wherein the gluing device is configured as a glue nozzle (20) configured as a spin nozzle in order to apply a loop-shaped glue track (21a) to the wrapping paper strip (18) and the device (10) is designed and configured to execute a method according to any one of Claims 1 to 8.

10. The device according to Claim 9, **characterized in that** it comprises a microwave rod measuring device (26), through which the conveying path of the filter rod (22) runs prior to the process of cutting the filter rods (32) to length, wherein the capacitive HF rod measuring device (24) and the microwave rod measuring device (26) in particular have a substantially identical field geometry and/or a substantially identical measuring volume.

11. The device (10) according to Claim 9 or 10, **characterized in that** the evaluation unit (28) is configured to actuate a rejection device (34).

**Revendications**

1. Procédé de surveillance d'un boudin de filtre (22) continu de l'industrie de transformation du tabac fabriqué à partir d'un matériau de filtre (12) en brins, qui est fabriqué à partir d'un matériau de filtre (12) en brins enveloppé d'une bande de papier d'enveloppement (18) et formé en un boudin continu, la bande de papier d'enveloppement (18) étant collée au matériau de filtre (12) en brins avec une colle (21) appliquée sur une face intérieure de la bande de papier d'enveloppement (18), le boudin de filtre (22) continu enveloppé par la bande de papier d'enveloppement (18) étant transporté à des fins de surveillance à travers un dispositif capacitif HF (24) de mesure de boudin, un signal de mesure HF dépendant des propriétés du matériau du boudin de filtre (22) étant mesuré, **caractérisé en ce qu'**une partie imaginaire d'une permittivité du boudin de filtre (22) est déterminée à partir du signal de mesure HF et **en ce qu'**une quantité de colle (21) appliquée sur le papier d'enveloppement (18) est déterminée à partir de la partie imaginaire déterminée de la permittivité, la colle (21) étant appliquée sur le papier d'enveloppement (18) au moyen d'un mouvement giratoire d'une buse giratoire selon une trace de colle (21a) en forme de boucle ; avant le début d'une production régulière d'un boudin de filtre (22), un réglage du mouvement giratoire de la buse giratoire est effectué en fonction de la colle utilisée (21) et de la quantité de colle utilisée, la variation de la quantité de colle étant déterminée en fonction du réglage de la buse giratoire et la buse giratoire étant réglée de manière à minimiser les variations dues au mouvement giratoire par chevauchement de la trace de colle (21a) en des boucles successives.

2. Procédé selon la revendication 1, **caractérisé en ce que** le signal de mesure HF présente une fréquence comprise entre 10 kHz et 300 MHz, en particulier entre 1 MHz et 15 MHz.

3. Procédé selon la revendication 1, **caractérisé en ce que** l'on détermine en outre une partie réelle de la permittivité du boudin de filtre (22).

4. Procédé selon l'une des revendications 1 à 3, **caractérisé en ce que** le boudin de filtre (22) enveloppé par la bande de papier d'enveloppement (18) est en outre transporté par un dispositif à micro-ondes (26) de mesure de boudin et une partie réelle et/ou une partie imaginaire de la permittivité du boudin de filtre (22) est déterminée à une fréquence micro-ondes, notamment comprise entre 1 GHz et 30 GHz, en particulier entre 4 GHz et 8 GHz.

5. Procédé selon l'une des revendications 1 à 4, **caractérisé en ce que**, en plus de la quantité de colle, on détermine ou on détecte également une densité du matériau de filtre (12) en brins dans le boudin de filtre (22), une humidité du boudin de filtre (22), une quantité de plastifiant dans le boudin de filtre (22) et/ou des corps étrangers dans le boudin de filtre (22).

6. Procédé selon l'une des revendications 1 à 5, **caractérisé en ce que** l'on applique comme colle (21) une colle froide sur la bande de papier d'enveloppement (18), ladite colle (21) étant notamment à base de copolymère ou à base d'acétate de polyvinyle.

7. Procédé selon l'une des revendications 1 à 6, **caractérisé en ce que** des variations dans l'application de la colle, en particulier des variations d'une quantité de colle appliquée et/ou des variations dans une uniformité d'une trace de colle (21a), sont déterminées, les variations déterminées étant en particulier comparées à une ou plusieurs valeurs limites de variation et, en cas de dépassement de la valeur limite de variation ou des valeurs limites de variation, les tiges de filtre (32) coupées à longueur ou les cigarettes à filtre qui ne sont pas conformes à la valeur limite sont ensuite exclues de la suite du traitement.

8. Procédé selon l'une des revendications 1 à 7, **caractérisé en ce que**, avant le début d'une production régulière d'un boudin de filtre (22) continu, on effectue un calibrage dans lequel une quantité de colle appliquée sur la bande de papier d'enveloppement (18) est augmentée en deux ou plusieurs étapes ou de manière continue dans le temps et la partie imaginaire de la permittivité du boudin de filtre (22) déterminée par la fréquence HF, et en particulier en outre les parties de la permittivité déterminées par la fréquence HF et éventuellement par la fréquence micro-ondes, est ou sont déterminées en fonction de la quantité de colle réglée, et, à partir de la dépendance déterminée de la quantité de colle, des données de calibrage sont déterminées pour la mesure lors de la production régulière ultérieure.

9. Dispositif (10) pour la fabrication d'une tige de filtre de l'industrie de transformation du tabac, fabriquée à partir d'un matériau de filtre (12) en brins, comprenant un dispositif de transport pour un matériau de filtre (12) en brins avec un trajet de transport depuis une réserve de brins de filtre à travers un dispositif (16) de formation de boudin jusqu'à un dispositif de coupe (27), une réserve de papier d'enveloppement et un dispositif d'encollage (20) pour encoller une face intérieure d'une bande de papier d'enveloppement (18) tirée de la réserve de papier d'enveloppement, qui est enroulée dans ou après le dispositif (16) de formation de boudin autour du matériau de filtre (12) en brins formé en boudin, ainsi qu'un dispositif capacitif HF (24) de mesure de boudin, qui est agencé et conçu pour mesurer un signal de mesure HF en présence du boudin de filtre (22), et une unité d'évaluation (28), **caractérisé en ce que** l'unité d'évaluation (28) est agencée et conçue pour déterminer, à partir d'une variation du signal de mesure HF, une partie imaginaire d'une permittivité du boudin de filtre (22) et pour déterminer, à partir de la partie imaginaire déterminée de la permittivité du boudin de filtre (22), une quantité de colle (21) appliquée sur la bande de papier d'enveloppement (18), le dispositif d'encollage étant conçu sous la forme d'une buse d'encollage (20) réalisée sous la forme d'une buse giratoire pour appliquer une trace de colle (21a) en forme de boucle sur la bande de papier d'enveloppement (18), et le dispositif (10) étant conçu et agencé pour mettre en œuvre un procédé selon l'une des revendications 1 à 8.

10. Dispositif (10) selon la revendication 9, **caractérisé en ce qu'**il comprend un dispositif à micro-ondes (26) de mesure de boudin par lequel passe le trajet de convoyage du boudin de filtre (22) avant le tronçonnage des tiges de filtre (32), le dispositif capacitif HF (24) de mesure de boudin et le dispositif à micro-ondes (26) de mesure de boudin présentant notamment une géométrie de champ et/ou un volume de mesure sensiblement identiques.

11. Dispositif (10) selon la revendication 9 ou la revendication 10, **caractérisé en ce que** l'unité d'évaluation (28) est conçue pour commander un dispositif de rejet (34).

Fig. 1

Im $\varepsilon_{HF}$ [a.u.]

$\phi_{tow}$ [a.u.]

Im $\varepsilon_{HF}$ [a.u.]

Triacetin [a.u.]

Im $\varepsilon_{HF}$ [a.u.]

Leim [a.u.]

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011006414 A1
- US 4389969 A
- DE 19505453 A1
- DE 102012209954 A1
- DE 102011083049 A1
- DE 102011083052 A1